# EUROPEAN PATENT SPECIFICATION

(11) **EP 1 724 100 B1**
(45) Date of publication and mention of the grant of the patent: **20.05.2009**
(21) Application number: 05719360.9
(22) Date of filing: 21.02.2005
(51) Int. Cl.: B29D 30/48, B29D 30/32, G05B 19/418

(54) **METHOD OF MANUFACTURING TIRE AND DEVICE FOR SUPPLYING BEAD MEMBER**
VERFAHREN ZUR REIFENHERSTELLUNG UND VORRICHTUNG ZUR ZUFÜHRUNG EINES WULSTGLIEDS
METHODE POUR FABRIQUER UN PNEUMATIQUE ET DISPOSITIF POUR FOURNIR UN ORGANE DE TALON

(30) Priority: 24.02.2004 JP 2004047781
(43) Date of publication of application: 22.11.2006
(73) Proprietor: Bridgestone Corporation, Tokyo 104-8340 (JP)
(72) Inventor: SAWADA, Chihiro, c/o BRIDGESTONE CORPORATION, Kodaira-shi, Tokyo, 1878531 (JP)
(74) Representative: Whalley, Kevin
(86) International application number: PCT/JP2005/002741
(87) International publication number: WO 2005/080069

(56) References cited:
- EP-A- 0 567 652
- EP-A- 1 059 246
- EP-A- 1 120 361
- WO-A1-20/04048074
- JP-A- 5 301 302
- JP-A- 7 121 228
- JP-A- 8 011 232
- JP-A- 8 162 694
- JP-A- 2002 011 806
- JP-A- 2003 515 474

## Description

The present invention relates to a tire production method based on a so-called multi-size, mixed production system which serves to efficiently produce green tires of different sizes selected from a group of predetermined sizes, and also to a bead member feeding device applicable to such a production method. Specifically, the present invention relates to a technology allowing successive production of tires having different rim diameters.

Recently, the size of tires has been progressively diversified. In the case of a traditional tire production system, tires of the same size are continuously produced and the tire size is switched when a predetermined number of a lot has been reached. In this instance, a huge amount of stocks has to be stored, with the result that productivity deteriorates in terms of cost and space. In order to mitigate such a problem, the present applicant has previously proposed an improved tire production system which allows production, within a predetermined tact time, of tires having sizes which are selected form a group consisting of a plurality of predetermined sizes. Reference is made, for example, to Japanese Patent Application No. 2002-341279.

In such a proposed tire production system, tire constitutive members are assembled for tires of a group of sizes to be produced, by predetermining, for each size within the group, the numbers of member elements common to each tire constitutive member, and assembling the predetermined number of the member elements with respect to each size of the group. Therefore, even when tires of different sizes are produced one after the other, the kind of the member element need not be changed, and it is necessary only to change the number of the member element. As a result, the tire production can be continued with the predetermined tact time, without requiring extra time for switching the tire size.

Attention is also drawn to the disclosures of EP-A-1120361; EP-A-0567652; EP-A-1059246; JP-A-8-011232; JP-2003-515474A; JP-A-8-162694; JP-A-5-301302; JP-2002-011806A; JP-A-7-121228; and WO2004/048074A.

However, as for bead members including a bead core, since the bead member previously formed into annular shape is to be installed, bead members of different sizes cannot be formed by assembling a predetermined number of common member elements for each size. Thus, the sizes of tires that can be simultaneously handled by the proposed tire production system are limited to tire sizes having the same rim diameter. This means that the degree of mixed production of tires of different sizes is still insufficient, thereby making it difficult to reduce the stocks.

The present invention has been achieved in view of the above-mentioned problem. It is the object of the present invention to provide a tire production method and a bead member feeding device for carrying out the method, capable of realizing a tire production system allowing tires of different rim diameters to be produced one after the other, within a predetermined tact time.

A first aspect of the present invention resides in a tire production method wherein green tires of a plurality of sizes selected from a group of sizes are produced within a predetermined tact time and under a predetermined production sequence, which includes a sequence phase wherein tire sizes of different rim diameters are produced one after the other;
wherein plural sizes of bead members are stored in a container as being arranged with an order predetermined according to said production sequence, and the bead members are installed into the green tires by removing the bead members from said container according to said order of arrangement, and feeding the removed bead members to the green tire under production.

A second aspect of the present invention resides in a tire production method wherein green tires of a plurality of sizes selected from a group of sizes are produced under a predetermined production sequence, which includes a sequence phase wherein tire sizes of different rim diameters are produced one after the other;
wherein plural sizes of bead members are stored in a container as being arranged with an order predetermined regardless of said production sequence, and the bead members are installed into the green tires by selecting the bead member of a required size and removing it from said container, and feeding the removed bead member to the green tire under production.

A third aspect of the present invention resides in a tire production method according to the second aspect, wherein,
upon storage of the bead members into the container, the size of the bead members and the location of the bead members within the container are memorized in association with each other, and,
upon selection of a bead member of a required size, the location of the required bead member is identified based on the memorized information.

A fourth aspect of the present invention resides in a tire production method according to the second aspect, wherein,
upon storage of the bead members into the container, size information of the bead members are recorded on the respective bead members or on record media corresponding to the respective bead members and stored at the same locations as the respective bead members, and,
upon selection of a bead member of a required size, the size information recorded on the bead members or the record media are successively read in an order of a predetermined arrangement of said locations and checked with the required size, and the location of the required bead member is identified based on check results.

A fifth aspect of the present invention resides in a bead member feeding device for use in the tire production method according to the first aspect, comprising:
a container yard for mooring, at predetermined locations, an occupied container in which cartridges each mounting a bead member are stacked and stored, and an empty container in which empty cartridges are stored; and
a bead member handling robot for removing bead members from the occupied container;
the bead members mounted on the cartridges stored in the occupied container having respective sizes that are orderly arranged in a vertical direction corresponding to said production sequence; and
said bead member handling robot being adapted to alternately remove the bead members and the cartridges from an upper side of the occupied container, to feed the removed bead members to green tire forming means, and to transfer the removed cartridges to the empty container.

A sixth aspect of the present invention resides in a bead member feeding device according to the fifth aspect, wherein the cartridges corresponding to the respective bead members are secured with identification code record media for recording identification code, including size information, of the bead members, said device further comprising bead member size determination means for reading the identification code from the record media and checking the size information so read with a size information based on information relating to the production sequence, and said bead member handling robot being adapted to feed the bead members removed from the occupied container to said green tire forming means via said bead member size determination means.

A seventh aspect of the present invention resides in a bead member feeding device according to the fifth or sixth aspect, wherein the bead members in said occupied container are arranged so that they are vertically movable with their respective axes aligned with a same vertical line, and said bead member handling robot comprising a bead member clamping hand having a plurality of expandable and retractable chucks, said bead member clamping hand being arranged at a bead member removing position so that the chucks have their respective center lines of expansion / retraction, which are aligned with said vertical line, and designed so that said chucks are expanded or retracted depending upon the size of the bead member determined by said production sequence.

### (Effects of the Invention)

According to the first aspect of the present invention, plural sizes of bead members are stored in a container as being arranged with an order predetermined according to the production sequence, and successively removed from the container according to the order of the arrangement. Therefore, it is possible to feed the bead members of the required sizes to the production system for successively producing tires of different dim diameters one after the other, thereby allowing simultaneous mixed production of tires of sizes with different rim diameters.

According to the second aspect of the present invention, the bead members of a plurality of sizes are stored in a container as being arranged with an order predetermined regardless of the production sequence, and are successively selected and removed from the container. Therefore, it is possible to feed the bead members of the required sizes to the production system for successively producing tires of different rim diameters one after the other, thereby allowing simultaneous mixed production of tires of sizes with different rim diameters.

According to the third aspect of the present invention, upon selection of the bead members of the required size, the location of the required bead member is identified based on the information memorized with respect to the sizes for each location within the container. Thus, the selection of the required bead members can be performed instantaneously

According to the fourth aspect of the present invention, upon selection of the bead members of the required size, the location of the required bead member is identified by scanning, immediately before the selection, the size information recorded on the bead members or the record media. Thus, the selection of the required bead members can be correctly performed.

According to the fifth aspect of the present invention, the bead members mounted on the cartridges are stored in the occupied container as being orderly arranged corresponding to the production sequence, and the bead member handling robot serves to remove the bead members from an upper side of the occupied container. Thus, the tire production method according to the first aspect can be carried out with a simple device, to realize a production system at low cost, which is operable based on a production sequence in which tires of different rim diameters are produced one after the other.

According to the sixth aspect of the present invention, the provision of the bead member size determination means for reading the identification code record media serves to prevent combination of incorrect bead members, thereby allowing a positive quality assurance.

According to the seventh aspect of the present invention, since the chuck of the bead clamping hand can be expanded or retracted, bead members of different sizes can be clamped by the hand which is made light in weight.

The invention will be further described with reference to one accompanying drawings, in which

FIG 1 is a plan view showing the arrangement of part of a production system including a bead member feeding device according to one embodiment of the invention.
FIGS. 2(a) and 2(b) are partial sectional views of tire constitutive members in steps for assembling a bead member to a carcass band, the sections being taken along a plane including the center axis A of the members.
FIGS. 3(a) and 3(b) are sectional views corresponding to the steps following those shown in FIGS. 2(a) and 2(b).
FIG 4 is a side view of an occupied container storing the bead members.
FIG 5 is a plan view showing the hand of the bead member handling robot.
FIG 6 is a view as seen in the direction of arrows A-A in FIG 5.
FIG 7 is a plan view showing a bead member feeding device according to another embodiment of the invention.
FIG 8 is a view as seen in the direction of arrows B-B in FIG 7.
FIG 9 is a view as seen in the direction of arrows C-C in FIG 7.

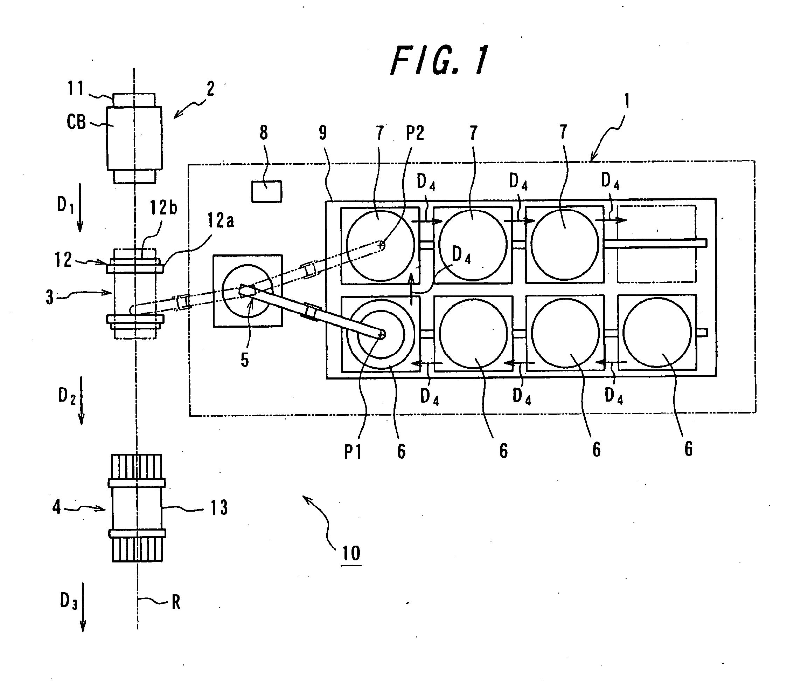

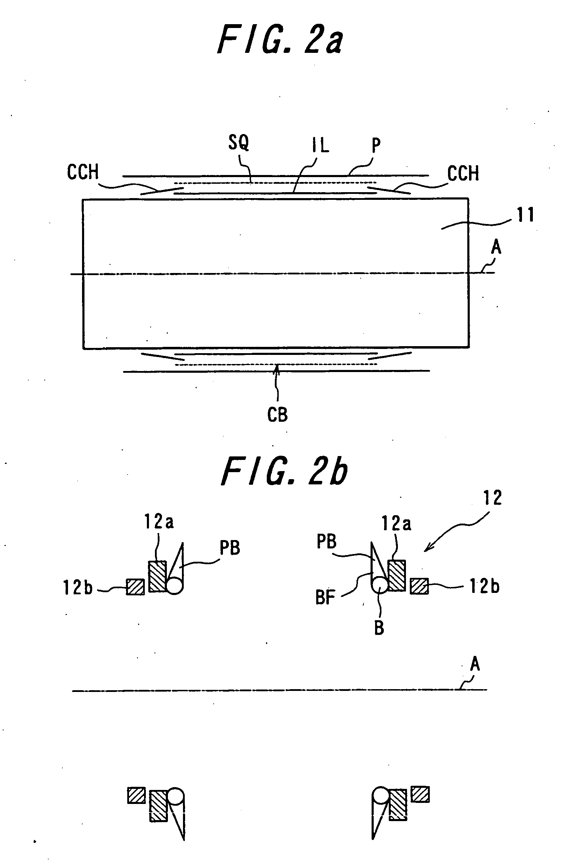

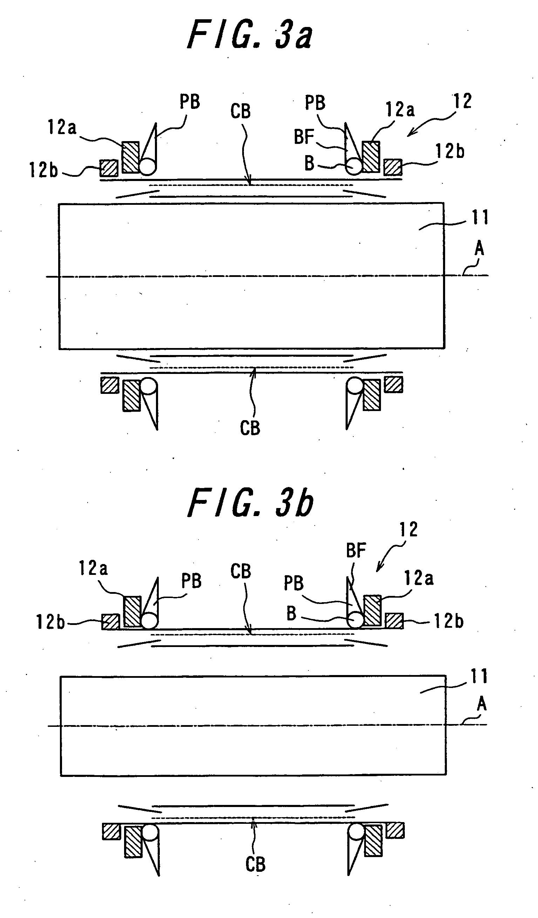

The present invention will be described below with reference to the embodiments shown in FIGS. 1 through 9. FIG 1 is a plan view showing the arrangement of part of a production system including a bead member feeding device according to one embodiment of the invention, FIGS. 2(a), 2(b), 3(a) and 3(b) are partial sectional views of tire constitutive members in steps for assembling a bead member to a carcass band, the sections being taken along a plane including the center axis A of the members.

The tire production system 10 includes a carcass band forming station 2 for forming a carcass band CB, a bead member installation station 3 for installing the bead members PB into the carcass band CB, and a turning-up station 4 for receiving the assembled carcass band CB, causing a bulging deformation of its center portion into toroidal shape, and turning-up both side portions of the carcass band CB around the bead members PB. The bead member installation station 3 is provided with a bead member feeding device 1 for feeding the bead members PB.

In the tire production system 10, the bead members PB are assembled into the carcass band CB as follows. First of all, at the carcass band forming station 2, as shown in FIG 2(a), the carcass band CB is formed on a carcass band forming drum 11 by successively applying, from the radially inner side, an inner liner IL, canvas chafers CCH, a squeegee SQ, and a carcass liner P in the circumferential direction, in the order of the stated sequence.

The carcass band CB is transferred by a band transfer carriage 12 from the carcass band forming drum 11 to the turning-up station 4. The band transfer carriage 12 is provided, on both sides in the width direction, with a pair of bead clamp rings 12a and a pair of bead clamp rings 12b, wherein the bead clamp rings 12a, 12b are movable symmetrically inwards and outwards in the width direction, and expandable outwards and retractable inwards in the radial direction. At the bead member installation station 3, as shown in FIG 2(b), the bead members PB are set to the widthwise inner side of both bead clamp rings 12a secured to the band transfer carriage 12, during formation of the carcass band CB. The bead member PB set in this way comprises a so-called preset bead wherein a bead filler BF has been preset to a bead core B in advance. However, it is alternatively possible to set only the bead core B in this process step, and form the bead filler BF at a later step.

Subsequently, the carcass band forming drum 11 bearing the carcass band CB on its outer periphery is moved in the direction of arrow D₁ and inserted into the radially inner sides of the bead clamp rings 12a, 12b of the band transfer carriage 12, as shown in FIG.3(a). The band clamp rings 12b are set to positions in the width direction, which are variable depending upon the size of the carcass band CB, and are radially retracted so as to clamp the carcass band CB from the radially outer side. The carcass band forming drum 11 is then retracted radially inwards and the band transfer carriage 12 is then moved in the direction of arrow D₂ to the turning-up station 4 where the carcass band CB is moved onto the outer periphery of the green tire forming drum 13, which had been waiting at the turning-up station 4, to thereby transfer it to the green tire forming drum 13.

Subsequently, the band transfer carriage 12 is moved in a direction opposite to that shown by the arrow D₂, and returned back to the bead member installation station 3, while the carcass band forming drum 11 is moved in a direction opposite to that shown by the arrow D₁, and returned back to the carcass band forming station 2. The carcass band CB has both its side portions turned up around the bead members at the turning-up station 4, and then moved along the direction of arrow D3 as being maintained supported on the green tire forming drum 13. During such movement of the carcass band CB, tire constitutive members such as tread rubber, belt member, etc., are installed so as to complete formation of the green tire, which is then transferred to a subsequent vulcanization station. The green tire forming drum 13 is then moved along endless rails R and returned to the initial position.

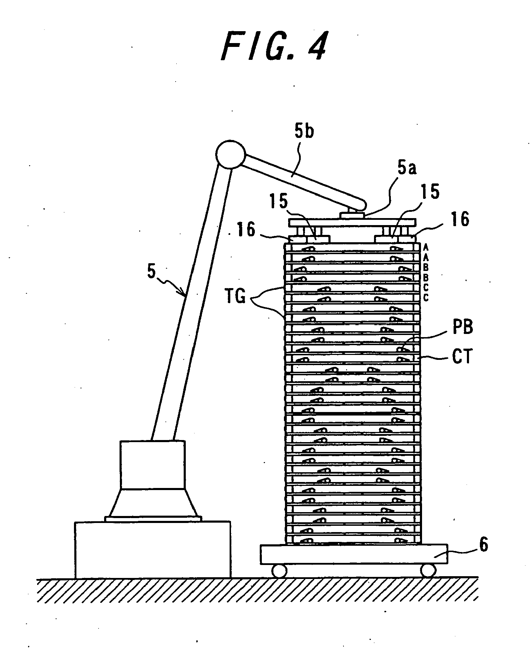

The bead member feeding device 1 for feeding the bead members PB and the method of feeding the bead members PB will be explained below. As shown in FIG 1, the bead member feeding device 1 includes a container yard 9 for mooring occupied containers 6 storing the bead members, and a bead member handling robot 5 for removing the bead members PB from the occupied containers 6 and transferring them to the bead clamp rings 12a of the band transfer carriage 12. FIG 4 is a side view of an occupied container 6 in which the bead members PB are stored. It can be seen that, in the occupied container 6, the bead members PB are mounted on annular cartridges CT, respectively, and these cartridges CT are stacked one above the other in the vertical direction, so as to store the bead members PB in the occupied container 6.

The bead members PB stacked in the vertical direction are stacked such that a bead member PB of a size to be used in an early phase of the production sequence is arranged on the upper side of a bead member PB of a size to be used in a late phase of the production sequence. For example, if a tire of a size B is produced after production of a tire of size A and a tire of a size C is produced after production of a tire of size B, then the bead members PB are correspondingly arranged in the occupied container 6 in the order of A, A, B, B, C, C from the upper side as shown in FIG 4. Here, two bead members of the same size form a pair since the bead members on the right and left sides of a tire are fed from the same occupied container 6. The predetermined production sequence includes a sequence phase in which tires of sizes with different rim diameters are produced one after the other. In the above example, the successive sizes A and B are of different rim diameters.

Each cartridge CT is equipped with a readable / writable ID tag TG for recoding an identification code identifying the bead member PB mounted on the cartridge CT. The ID tag TG serves as an identification code record medium for recording an identification code of the bead member PB corresponding to that cartridge CT, wherein the identification code includes the size information of the bead member PB. Thus, the identification code of the bead member PB mounted on each cartridge CT is written into the ID tag TG of that cartridge CT when the bead member PB is loaded into the occupied container 6, and the identification code is read when the bead member PB is removed from the cartridge CT. Instead of the ID tag TG, the identification code record media may comprise other media such as a sheet printed with a bar code, or a magnetic card.

At the container yard 9, there are also moored empty containers 7 for storing empty cartridges CT as being stacked one above the other. The bead member feeding device 1 is further provided with a bead member size determination means 8 for reading the information of the ID tag TG secured to the cartridge CT. The bead member size determination means 8 comprises a memory means for memorizing the desired size determined by the production sequence, means for reading the information of the ID tag TG, a judging means for judging whether the size among the information as read matches with the desired size memorized by the memory means, and an abnormal processor means operative when these sizes are different from each other, for generating an alarm or stopping the device.

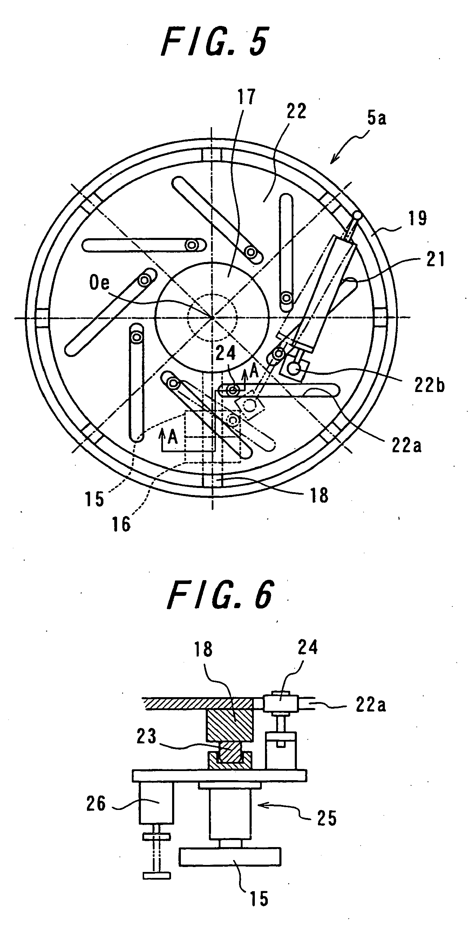

The bead member handling robot 5 includes a hand 5a that is provided at the tip end of a polyarticular arm 5b. FIG 5 is a plan view showing the hand 5a of the bead member handling robot 5, and FIG 6 is a view as seen in the direction of arrows A-A in FIG 5. The hand 5a includes a hand base portion 17 that is secured to the tip end of the polyarticular arm 5b in an oscillatable or slidable manner, a plurality of stays 18 integrally secured to the hand base portion 17 so as to extend radially outwards, a hand outer edge portion 19 connected integrally to the hand base portion 17 through the stays 18, a movable plate 22 supported by the stays 18 and guided by the hand outer edge portion 19 so as to be rotatable about a center axis Oe, a driving cylinder 21 having one end connected to the hand outer edge portion 19 and an extensible/contractible rod end connected to a point 22b on the movable plate 22 so as to rotate the movable plate 22, linear guides 23 secured to the respective stays 18 and extending in the radial directions, and expansion/retraction blocks 25 guided by the respective linear guides 23 so as to be movable in the radial direction. The movable plate 22 is formed, at a plurality of circumferential positions, e.g., eight positions in the embodiment shown in FIG 5, with elongated holes 22a each extending in a direction inclined to the radial direction, and through the movable plate 22 from its front side to the rear side.

Each expansion/retraction block 25 includes a bead member clamp chuck 15 for clamping the bead member PB at one of a plurality of positions arranged on the same circle, a cartridge clamp chuck 16 for clamping the cartridge CT in the same manner, a removal cylinder 26 for removing, from the bead member clamp chuck 15, the bead member PB in tight contact therewith, and a guide pin 24 engaged with the elongated hole 22a in the movable plate 22. The rod of the driving cylinder 21 is extended or retracted to have a required length selected from plural length steps depending upon the size determined by the production sequence, so as to rotate the movable plate 22 to control the circumferential positions of the elongated holes 22a. As a result, due to the engagement of the guide pins 24 with the elongated holes 22a, the guide pins 24 are radially moved into the predetermined positions so as to simultaneously operate the plurality of expansion/retraction blocks 25 which are integrally movable with the guide pins 24, thereby expanding or retracting the bead member clamp chucks 15 depending upon the rim diameter of the bead member PB to be clamped.

The bead member clamp chuck 15 may be comprised, for example, of a magnetic chuck using magnetic force. The cartridge clamp chuck 16 may be comprised, for example, of a suction chuck using suction force.

The operation of the bead member feeding device 1 will be explained below. The bead member handling robot 5 is operated so that the bead member PB is removed from the occupied container 6 at a bead member removal position P 1 and transferred to the bead clamp ring 12a on one side of the band transfer carriage 12 which had been waiting there. Then, the cartridge CT is removed from the occupied container 6, passed through the vicinity of the bead member size determination means 8 and transferred to the empty container 7. On this occasion, the bead member size determination means 8 reads the information of the ID tag TG, and generates an alarm and stops the operation of the device 1 if the information so read does not correspond to the required size. If no problem has been found, the bead member handling robot 5 continues the predetermined operation, to ! successively remove the next bead member PB on the uppermost side at the bead member removal position P1 and transfer it to the bead clamp ring 12a on the other side of the band transfer carriage 12. The corresponding cartridge CT is removed from the occupied container 6, and transferred to the empty container 7, in a similar manner.

When all the bead members PB stacked on the occupied container 6 have been removed, the containers 6, 7 are fed in the direction of arrow D4 by one pitch. Thus, the occupied container 6 at the bead member removal position P 1 is moved to a cartridge transfer position P2 and starts its new function as an empty container for stacking the cartridges CT only. Another occupied container 6 is set at the bead member removal position P1, which is fully loaded with the new bead members PB.

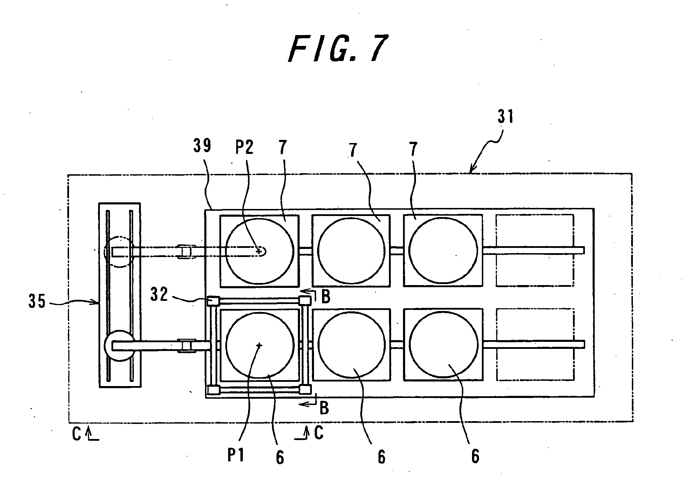

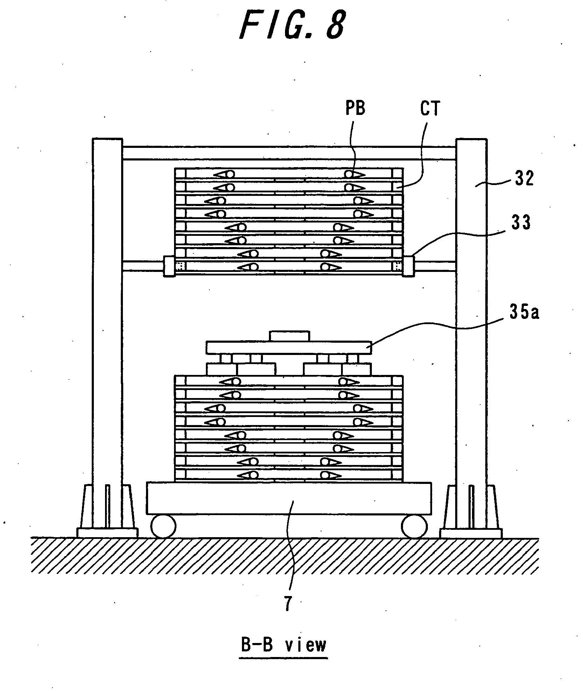

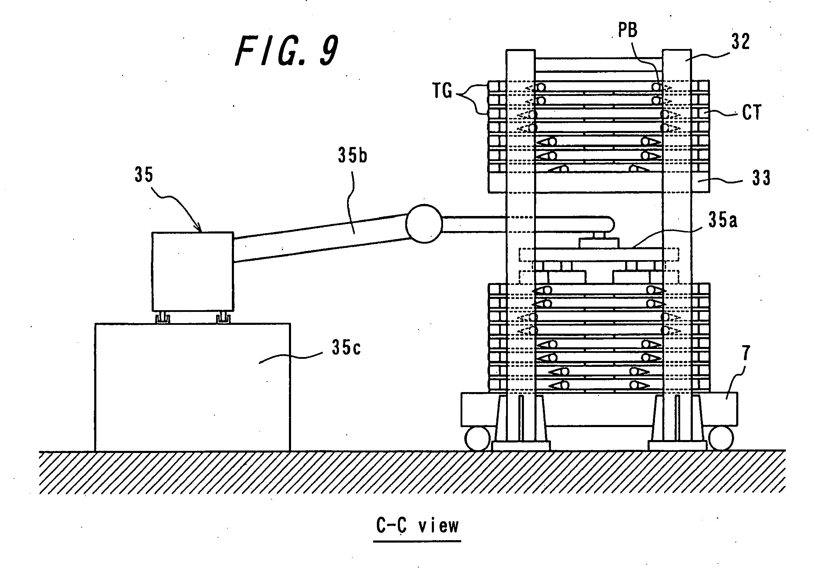

Another embodiment of the bead member feeding device 31 is shown in FIGS. 7 through 9, wherein FIG 7 is a plan view of the bead member feeding device 31, FIG 8 is a view as seen in the direction of arrows B-B in FIG 7, and FIG 9 is a view as seen in the direction of arrows C-C in FIG 7. The bead member feeding device 31 includes a container yard 39 for mooring occupied containers 6 storing the bead members, and a bead member handling robot 35 for removing the bead members PB from the occupied containers 6 and transferring them to the bead clamp rings 12a of the band transfer carriage 12. In the occupied container 6, the bead members PB are mounted on annular cartridges CT, respectively, and these cartridges CT are stacked one above the other in the vertical direction, so as to store the bead members PB in the occupied container 6.

The bead members PB are stacked in the vertical direction with a disposition that is independent from the production sequence. Thus, the bead member feeding device 31 includes a bead member disposition memory means (not shown), which memorizes information relating to the disposition of the bead members PB in the occupied container 6. When the loading of the bead members PB into the occupied container 6 has been completed at a loading station, the information relating to the disposition of the bead members PB is transmitted from the loading station to the bead member feeding device 31.

The bead member feeding device 31 further includes an occupied container identification means for reading the ID tag provided for the occupied container 6 to thereby identify the ID of the occupied container. Thus, the bead member feeding device 31 is capable of identifying the occupied container 6 at the removal position. Since the information relating to the disposition of the bead members PB in the occupied container 6 is memorized in the bead member disposition memory means, it is possible to identify in advance at which of the stages the bead member of the required size is arranged.

It is necessary for the bead member handling robot 35 to successively remove from the occupied container 6 the bead members PB of the sizes determined according to the predetermined production sequence. In the illustrated embodiment, since the bead members PB are stacked in the occupied container 6 independently from the production sequence, the bead member PB to be removed is scarcely situated at the uppermost side. Therefore, in order to remove the bead member PB by the hand 35a of the bead member handling robot 35, the hand 35a has to be inserted in between the bead members PB at the intermediate stages. To this end, there is provided a cartridge elevator 32, which compares the desired size determined by the production sequence with the size disposition information memorized in the bead member disposition memory means so as to identify the location of the bead member PB having the desired size, and move the cartridges CT and the bead members PB, which are situated on the upper side of the identified location. As a result, there is formed a space for inserting the hand 35a of the bead member handling robot 35. Subsequently, the bead member handling robot 35 acquires the identified bead member location information from the cartridge elevator 32 and inserts the hand 35a into the space formed as mentioned above, so as to allow removal of the bead member PB and its transfer to the band transfer carriage 12, as in the previous embodiment.

The cartridge elevator 32 is designed so that cartridge holder plates 33 for sandwiching the cartridge CT at the predetermined stage or holding the cartridge CT through engagement of pins into corresponding holes in the cartridge CT are moved vertically by a motor or the like drive means, not shown. Furthermore, the bead member handling robot 35 includes, besides the hand 35a and the polyarticular arm 35b, a traverse mechanism 35c for moving the polyarticular arm 35b back and forth between positions corresponding to the removal position P1 and the transfer position P2, respectively

As explained with reference to the previous embodiment, each cartridge CT is equipped with a readable/writable ID tag TG for recording the identification code identifying the bead member PB mounted on that cartridge CT, and a bead member size determination means 38 is provided for reading the information from the ID tag TG, and comparing the required size with the size of the removed bead member PB in the manner explained above.

As for the method of identifying the location of the bead member PB having the desired size, instead of using the above-mentioned bead member disposition memory means, the identification may be performed based only on the information of the ID tags TG secured to the respective cartridges CT. In this instance, tag ID reading means are secured to the cartridge holder plate 33 of the cartridge elevator 32, the cartridge holder plate 33 is moved vertically to scan the tag IDs of the cartridges CT before holding the cartridge CT by the cartridge holder plate 33, and the location of the bead member PB corresponding to the size information matched with the desired size is memorized to identify the desired bead member PB.

## Claims

1. A tire production method wherein green tires of a plurality of sizes selected from a group of sizes are produced within a predetermined tact time and under a predetermined production sequence, which includes a sequence phase wherein tire sizes of different rim diameters are produced one after the other;
**characterized in that** plural sizes of bead members (PB) are stored in a container (6) as being arranged with an order predetermined according to said production sequence, and the bead members are installed into the green tires by removing the bead members from said container according to said order of arrangement, and feeding the removed bead members to the green tire under production.

2. A tire production method wherein green tires of a plurality of sizes selected from a group of sizes are produced under a predetermined production sequence, which includes a sequence phase wherein tire sizes of different rim diameters are produced one after the other;
**characterized in that** plural sizes of bead members (PB) are stored in a container (6) as being arranged with an order predetermined regardless of said production sequence, and the bead members are installed into the green tires by selecting the bead member of a required size and removing it from said container, and feeding the removed bead member to the green tire under production.

3. A tire production method as claimed in claim 2, wherein, upon storage of the bead members into the container, the size of the bead members and the location of the bead members within the container are memorized in association with each other; and, upon selection of a bead member of a required size, the location of the required bead member is identified based on the memorized information.

4. A tire production method as claimed in claim 2, wherein, upon storage of the bead members into the container, size information of the bead members are recorded on the respective bead members or on record media corresponding to the respective bead members and stored at the same locations as the respective bead members; and, upon selection of a bead member of a required size, the size information recorded on the bead members or the record media are successively read in an order of a predetermined arrangement of said locations and checked with the required size, and the location of the required bead member is identified based on check results.

5. A bead member feeding device (1) for use in the tire production method as claimed in claim 1, comprising:
a container yard (9) for mooring, at predetermined locations, an occupied container (6) in which cartridges (CT) each mounting a bead member (PB) are stacked and stored, and an empty container (7) in which empty cartridges are stored; and
a bead member handling robot (5) for removing bead members from the occupied container;
the bead members mounted on the cartridges stored in the occupied container having respective sizes that are orderly arranged in a vertical direction corresponding to said production sequence; and
said bead member handling robot being adapted to alternately remove the bead members and the cartridges from an upper side of the occupied container, to feed the removed bead members to green tire forming means, and to transfer the removed cartridges to the empty container.

6. A bead member feeding device as claimed in claim 5, wherein the cartridges (CT) corresponding to the respective bead members (PB) are secured with identification code record media (TG) for recording identification code, including size information, of the bead members, said device further comprising bead member size determination means (8) for reading the identification code from the record media and checking the size information so read with a size information based on information relating to the production sequence, and said bead member handling robot (5) being adapted to feed the bead members removed from the occupied container to said green tire forming means via said bead member size determination means.

7. A bead member feeding device as claimed in claim 5 or 6, wherein the bead members (PB) in said occupied container (6) are arranged so that they are vertically movable with their respective axes aligned with a same vertical line, and said bead member handling robot (5) comprising a bead member clamping hand (5a) having a plurality of expandable and retractable chucks (15), said bead member clamping hand being arranged at a bead member removing position so that the chucks have their respective center lines of expansion / retraction, which are aligned with said vertical line, and designed so that said chucks are expanded or retracted depending upon the size of the bead member determined by said production sequence.

## Patentansprüche

1. Verfahren zur Reifenherstellung, bei dem Reifenrohlinge einer Vielzahl von Größen, die aus einer Gruppe von Größen ausgewählt werden, innerhalb einer vorgegebenen Taktzeit und in einem vorgegebenen Produktionsablauf hergestellt werden, der eine Ablaufphase umfasst, bei der Reifengrößen unterschiedlicher Felgendurchmesser eine nach der anderen hergestellt werden;
**dadurch gekennzeichnet, dass** mehrere Größen von Wulstelementen (PB) in einem Behälter (6) gelagert werden, in einer Reihenfolge angeordnet, die gemäß dem Produktionsablauf vorgegeben wird, und die Wulstelemente in die Reifenrohlinge eingebaut werden, indem die Wulstelemente aus dem Behälter gemäß der Reihenfolge der Anordnung entnommen und die entnommenen Wulstelemente dem Reifenrohling bei der Produktion zugeführt werden.

2. Verfahren zur Reifenherstellung, bei dem Reifenrohlinge einer Vielzahl von Größen, die aus einer Gruppe von Größen ausgewählt werden, in einem vorgegebenen Produktionsablauf hergestellt werden, der eine Ablaufphase umfasst, bei der Reifengrößen unterschiedlicher Felgendurchmesser eine nach der anderen hergestellt werden;
**dadurch gekennzeichnet, dass** mehrere Größen von Wulstelementen (PB) in einem Behälter (6) gelagert werden, in einer Reihenfolge angeordnet, die ungeachtet des Produktionsablaufes vorgegeben wird, und die Wulstelemente in die Reifenrohlinge eingebaut werden, indem das Wulstelement einer geforderten Größe ausgewählt und aus dem Behälter entnommen und das entnommene Wulstelement dem Reifenrohling bei der Produktion zugeführt wird.

3. Verfahren zur Reifenherstellung nach Anspruch 2, bei dem bei der Einlagerung der Wulstelemente in den Behälter die Größe der Wulstelemente und die Stelle der Wulstelemente innerhalb des Behälters in Verbindung miteinander gespeichert werden, und wobei bei der Auswahl eines Wulstelementes einer geforderten Größe die Stelle des geforderten Wulstelementes basierend auf der gespeicherten Information identifiziert wird.

4. Verfahren zur Reifenherstellung nach Anspruch 2, bei dem bei der Einlagerung der Wulstelemente in den Behälter die Größeninformation der Wulstelemente auf den jeweiligen Wulstelementen oder auf Speichermedien entsprechend den jeweiligen Wulstelementen aufgezeichnet und an den gleichen Stellen wie die jeweiligen Wulstelemente gelagert werden, und wobei bei der Auswahl eines Wulstelementes einer geforderten Größe die auf den Wulstelementen oder den Speichermedien aufgezeichnete Größeninformation aufeinanderfolgend in einer Reihenfolge einer vorgegebenen Anordnung der Stellen gelesen und mit der erforderlichen Größe überprüft wird, und die Stelle des erforderlichen Wulstelementes auf der Basis der Prüfergebnisse identifiziert wird.

5. Vorrichtung (1) zur Zuführung eines Wulstelementes für eine Verwendung beim Verfahren zur Reifenherstellung nach Anspruch 1, die aufweist:
einen Behälterlagerplatz (9) für das Festmachen eines gefüllten Behälters (6) an vorgegebenen Stellen, in dem Kassetten (CT), die jeweils ein Wulstelement (PB) aufnehmen, gestapelt und gelagert werden, und einen leeren Behälter (7), in dem leere Kassetten gelagert werden; und
einen Handhabungsroboter (5) für Wulstelemente für das Entnehmen der Wulstelemente aus dem gefüllten Behälter;
wobei die in den Kassetten aufgenommenen Wulstelemente, die im gefüllten Behälter gelagert werden, jeweilige Größen aufweisen, die in einer vertikalen Richtung entsprechend dem Produktionsablauf geordnet angeordnet sind; und
wobei der Handhabungsroboter für Wulstelemente ausgebildet ist, um abwechselnd die Wulstelemente und die Kassetten aus einer oberen Seite des gefüllten Behälters zu entnehmen, um die entnommenen Wulstelemente der Herstellungseinrichtung für den Reifenrohling zuzuführen, und um die entnommenen Kassetten zum leeren Behälter zu transportieren.

6. Vorrichtung zur Zuführung eines Wulstelementes nach Anspruch 5, bei der die Kassetten (CT) entsprechend den jeweiligen Wulstelementen (PB) mit Identifizierungscode-Speichermedien (TG) für das Aufzeichnen des Identifizierungscode der Wulstelemente, einschließlich der Größeninformation, gesichert sind, wobei die Vorrichtung außerdem eine Größenermittlungseinrichtung (8) für Wulstelemente für das Lesen des Identifizierungscodes aus den Speichermedien und das Überprüfen der Größeninformation aufweist, basierend auf der Information, die den Produktionsablauf betrifft, und wobei der Handhabungsroboter (5) für Wulstelemente ausgeführt ist, um die aus dem gefüllten Behälter entnommenen Wulstelemente zur Herstellungseinrichtung für den Reifenrohling mittels der Größenermittlungseinrichtung für Wulstelemente zuzuführen.

7. Vorrichtung zur Zuführung eines Wulstelementes nach Anspruch 5 oder 6, bei der die Wulstelemente (PB) im gefüllten Behälter (6) so angeordnet sind, dass sie vertikal beweglich sind, wobei ihre jeweiligen Achsen mit einer gleichen vertikalen Linie ausgerichtet sind, und bei der der Handhabungsroboter (5) für Wulstelemente eine Wulstelementfestklemmhand (5a) mit einer Vielzahl von expandierbaren und zurückziehbaren Spannfuttereinrichtungen (15) aufweist, wobei die Wulstelementfestklemmhand in einer Wulstelemententnahmeposition angeordnet ist, so dass die Spannfuttereinrichtungen ihre jeweiligen Mittellinien der Expansion/Zurückziehung aufweisen, die mit der vertikalen Linie ausgerichtet sind, und so konstruiert sind, dass die Spannfuttereinrichtungen in Abhängigkeit von der Größe des durch den Produktionsablauf ermittelten Wulstelementes expandiert oder zurückgezogen werden.

## Revendications

1. Procédé de production d'un bandage pneumatique, dans lequel des bandages pneumatiques crus de plusieurs tailles, sélectionnées parmi un groupe de tailles, sont produits dans le cadre d'un temps de cycle prédéterminé et dans le cadre d'une séquence de production prédéterminée, englobant une phase de séquence au cours de laquelle des tailles de bandages pneumatiques ayant différents diamètres de jante sont produites l'une après l'autre ;
**caractérisé en ce que** plusieurs tailles d'éléments de talon (PB) sont stockées dans un récipient (6), agencées dans un ordre prédéterminé en fonction de ladite séquence de production, les éléments de talon étant installés dans les bandages pneumatiques crus en retirant les éléments de talon dudit récipient en fonction dudit ordre d'agencement, les éléments de talon retirés étant amenés vers le bandage pneumatique cru en cours de production.

2. Procédé de production d'un bandage pneumatique, dans lequel des bandages pneumatiques de plusieurs tailles, sélectionnées dans un groupe de tailles, sont produits dans le cadre d'une séquence de production prédéterminée, englobant une phase de séquence au cours de laquelle des tailles de bandages pneumatiques ayant différents diamètres de jante sont produites l'une après l'autre ;
**caractérisé en ce que** plusieurs tailles d'éléments de talon (PB) sont stockées dans un récipient (6), agencées dans un ordre prédéterminé, indépendamment de ladite séquence de production, les éléments de talon étant installés dans les bandages pneumatiques crus en sélectionnant l'élément de talon ayant une taille requise et en le retirant dudit récipient, et en amenant l'élément de talon retiré vers le bandage pneumatique cru en cours de production.

3. Procédé de production d'un pneumatique selon la revendication 2, dans lequel, lors du stockage des éléments de talon dans le récipient, la taille des éléments de talon et l'emplacement des éléments de talon dans le récipient sont mémorisés en association les uns avec les autres ; et, lors de la sélection d'un élément de talon d'une taille requise, l'emplacement de l'élément de talon requis est identifié sur la base des informations mémorisées.

4. Procédé de production d'un pneumatique selon la revendication 2, dans lequel, lors du stockage des éléments de talon dans le récipient, des informations concernant la taille des éléments de talon sont enregistrées sur les éléments de talon respectifs ou sur des supports d'enregistrement correspondant aux éléments de talon respectifs et stockés dans les mêmes emplacements que les éléments de talon respectifs ; et, lors de la sélection d'un élément de talon ayant une taille requise, les informations concernant la taille enregistrées sur les éléments de talon ou sur les supports d'information sont successivement extraites dans un ordre correspondant à un agencement prédéterminé desdits emplacements et contrôlées par rapport à la taille requise, l'emplacement de l'élément de talon requis étant identifié sur les base des résultats de contrôle.

5. Dispositif d'amenée d'un élément de talon (1) destiné à être utilisé dans le procédé de production d'un bandage pneumatique selon la revendication 1, comprenant :
un dépôt de récipients (9) pour ancrer, au niveau d'emplacements prédéterminés, un récipient occupé (6), dans lequel des cartouches (CT), supportant chacune un élément de talon (PB), sont empilées et stockées ; et un récipient vide (7), dans lequel sont stockées des cartouches vides ; et
un robot de manutention des éléments de talon (5) pour retirer des éléments de talon du récipient occupé ;
les éléments de talon montés sur les cartouches stockées dans le récipient occupé ayant des tailles respectives agencées dans un ordre défini dans une direction verticale, correspondant à ladite séquence de production ; et
ledit robot de manutention des éléments de talon étant adapté pour retirer alternativement les éléments de talon et les cartouches d'un côté supérieur du récipient occupé, pour amener les éléments de talon retirés vers un moyen de confection du bandage pneumatique cru et pour transférer les cartouches retirées vers le récipient vide.

6. Dispositif d'amenée d'éléments de talon selon la revendication 5, dans lequel les cartouches (CT) correspondant aux éléments de talon respectifs (PB) sont sécurisées par des supports d'enregistrement d'un code d'identification (TG), pour enregistrer un code d'identification des talons, englobant des informations concernant la taille des éléments de talon, ledit dispositif comprenant en outre un moyen de détermination de la taille des éléments de talon (8) pour extraire le code d'identification des supports d'information et contrôler les informations concernant la taille ainsi extraites par rapport à des informations sur la taille basées sur des informations concernant la séquence de production, ledit robot de manutention des éléments de talon (5) étant adapté pour amener les éléments de talon retirés du récipient occupé vers ledit moyen de confection du bandage pneumatique cru via ledit moyen de détermination de la taille des éléments de talon.

7. Dispositif d'amenée d'éléments de talon selon les revendications 5 ou 6, dans lequel les éléments de talon (PB) dans ledit récipient occupé (6) sont agencés de sorte à pouvoir être déplacés dans une direction verticale, leurs axes respectifs étant alignés avec une même ligne verticale, ledit robot de manutention des éléments de talon (5) comprenant une main de serrage des éléments de talon (5a) comportant plusieurs mandrins extensibles et rétractables (15), ladite main de serrage des éléments de talon étant agencée au niveau d'une position de retrait de l'élément de talon, les mandrins comportant ainsi leurs lignes médianes respectives d'extension/de rétraction, alignées avec ladite ligne verticale, et conçues de sorte que lesdits mandrins sont étendus ou rétractés en fonction de la taille de l'élément de talon déterminée par ladite séquence de production.
